# EUROPEAN PATENT APPLICATION

(11) **EP 1 217 118 A1**
(43) Date of publication of application: **26.06.2002**
(21) Application number: 00204143.2
(22) Date of filing: 22.11.2000
(51) Int. Cl.: D06M 15/65, D06M 13/50, D06L 1/04

(54) **Method of treatment of textile to provide water repellency thereto**

(71) Applicant: 3M Innovative Properties Company, St. Paul, Minnesota 55133-3427 (US)
(72) Inventor: Allewaert, Kathy E., B-1831 Diegem (BE); Vander Elst, Pierre, B-1831 Diegem (BE); Van Royen, Anne E., B-1831 Diegem (BE)
(74) Representative: Voortmans, Gilbert J.L.

(57) **Abstract**

The present invention provides a method for providing water repellency to a textile substrate comprising contacting the textile substrate with a composition comprising a solution of an epoxy functional polysiloxane and an organic titanate ester in an organic solvent.

## Description

### 1. Field of the invention

The present invention relates to a method for treating textile and to provide water repellency thereto. In particular, the present invention relates to the treatment of textile with a polysiloxane containing composition.

### 2. Background of the invention.

Various compositions for making substrates water repellent, and in particular fibrous substrates such as textile, are known in the art. Generally, the commercially available compositions to render textile water repellent comprise a fluorochemical compound, i.e. a compound that comprises substantial amounts of fluorine. Such fluorochemical compounds can be simple low molecular weight compounds as well as oligomeric or polymeric compounds. Such fluorochemical based compositions generally also provide oil repellency properties.

When oil repellency is not a requirement and water repellency properties are sufficient, textile can also be treated with other compositions such as compositions based on hydrocarbon compounds or compositions based on polysiloxanes. For example, DE 3116509 discloses a composition comprising polydimethylsiloxanes having hydroxy endgroups for rendering textile and leather water repellent. EP 246007 discloses a cleaning and water proofing composition comprising a siloxane resin copolymer, a polydimethylsiloxane fluid, a titanate ester and a dimethylsiloxane-oxyalkylene block copolymer dispersed in a solvent.

NL 8101672 discloses an aqueous composition that contains one or more polysiloxanes that have an amino group, zinc acetate and triethanolaminetitanate to provide water repellency to textile. Because these compositions are water based, they are not compatible with dry cleaning and therefore cannot be applied during or at the end of dry cleaning of the textile. Aqueous based compositions are also disclosed in NL 7002622 and EP 651089.

Polysiloxane compositions are also known for application on other substrates. For example, US 4,749,110 discloses a spray can containing a polyorganosiloxane having hydroxy endgroups, a silane coupling agent, a silicone oil and a dibutyltin dilaurate catalyst in an organic solvent to provide a water repellent coating on for example the exterior of a car.

Despite the many known compositions for rendering textile water repellent, there continues to be the desire to find further suitable and/or improved compositions. In particular, it is desirable to find further polysiloxane based compositions that can be used to render textile water repellent. Typically, such compositions would have a high efficiency in providing water repellency such that they can be applied at low amounts while displaying excellent water repellency. Desirably, the compositions are cost-effective, can be easily produced and have a good stability. Further, the compositions can preferably be applied from a solvent and are compatible with dry cleaning of textile such that the application of the composition can proceed during or at the end of dry cleaning in a dry cleaning apparatus. Preferably, such solvent is non-aromatic.

### 3. Summary of the invention.

The present invention provides a method for providing water repellency to a textile substrate. The method comprises contacting the textile substrate with a composition comprising a solution of an epoxy functional polysiloxane and an organic titanate ester in an organic solvent. Typically, the method further comprises the steps of removing the organic solvent by drying the substrate and/or subsequently curing the applied composition by applying heat thereto.

It has been found that the method of the present invention provides excellent water repellency properties to textile substrates even at low application levels of the composition. Furthermore, the composition can be applied at the end of or after dry cleaning of the textile substrate in a dry cleaning equipment.

### 4. Detailed description of the invention.

The composition used in the method of treatment of textile in accordance with the present invention comprises an epoxy functional polysiloxane. Generally, the epoxy functional polysiloxane comprises repeating siloxy units that contain hydrocarbon substituents such as for example alkyl or aryl groups. The epoxy functional polysiloxane may have one or more epoxy groups as pending groups on the backbone of the polysiloxane. Alternatively or in addition thereto, one or more epoxy groups may be contained in the terminating groups of the polysiloxane.

Preferred epoxy functional polysiloxanes correspond to the formula: 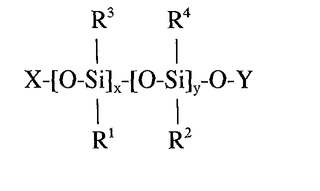 wherein X and Y each independently represents a terminal group, R¹ and R³ each independently represents an alkyl group, preferably a C₁-C₈ alkyl group such as methyl, ethyl or propyl or an alkyl group containing a cycloalkyl such as cyclohexyl or cylcopentyl, an aryl group such as phenyl, an alkylaryl group or an aralkyl group, R² represents an alkyl group for example as listed above for R¹, an aryl group, an alkylaryl group, an aralkyl group or an epoxy containing organic group, R⁴ represents an epoxy containing organic group, x and y represent the amount of the corresponding unit present in the polysiloxane. The value of x can be 0 and the value of y will generally be non-zero. However, if at least one of the terminal groups X and Y contains an epoxy containing organic group, then y can be 0 provided of course that x is then different from 0.

Examples of typical terminal groups X and Y include hydroxy, amino or R₃Si in which each R independently represents an alkyl group for example as listed above for R¹, an aryl group, an alkylaryl group, an aralkyl group or an epoxy containing organic group.

Examples of epoxy containing organic groups include aliphatic groups containing an epoxy group. Particular examples of epoxy containing organic groups are: 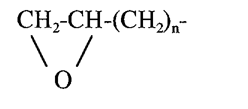 wherein n is an integer of 0 to 6, typically 1, 2 or 3; 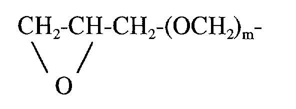 wherein m is an integer of 1 to 5;

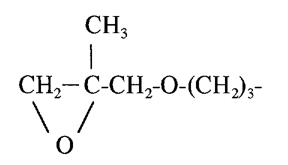

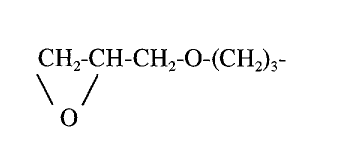

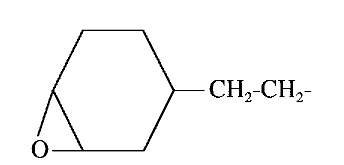

The epoxy functional polysiloxane is generally used in the treatment composition in an amount of 5 to 8.5 % by weight, preferably in an amount of 6 to 7.5 % by weight. The composition may also contain further non-epoxy functional polysiloxanes such as for example amino or hydroxy terminated polydimethylsiloxanes. However, it will generally be preferred that a major amount of the total amount of polysiloxanes in the composition is epoxy functional. In a particularly preferred embodiment in accordance with the present invention, the relative amount of epoxy functional polysiloxanes will be at least 80% by weight and more preferably at least 95 % by weight based on the total weight of polysiloxane present in the composition. Most preferably, the composition will contain only epoxy functional polysiloxanes.

In addition to the epoxy functional polysiloxane, the treatment composition should also contain an organic titanate ester. Preferred organic titanate esters for use in the treatment composition are alkyl titanate esters. Examples of suitable organic titanate esters include tetraethyl titanate, tetrapropyl titanate, tetraisopropyl titanate, tetra-n-butyl titanate, tetra-2-ethylhexyl titanate, tetraphenyl titanate, tetraoctadecyl titanate, tetrastearyl titanate, diisopropoxylbiacetylacetone titanate, tri-n-butoxymonostearyl titanate and dihydroxybislactic acid titanate. The organic titanate ester is generally present in the composition in an amount of 1.5 to 5 % by weight, preferably in an amount of 2.5 to 4 % by weight.

Preferred organic solvents for the composition for use in the method for treating textile substrates in accordance with the present invention are organic solvents that are compatible with dry cleaning and that are non-aromatic. Examples of suitable solvents include ketones, ethers, aliphatic solvents and halogenated solvents. Especially preferred are aliphatic isoparaffin solvents and halogenated solvents such as perchloroethylene.

The compositions may be applied to the textile substrate in any of the known ways including spraying the composition on the textile or rinsing the textile with the composition. The composition will generally be applied in an amount sufficient such that 0.05 % to 5 % by weight, preferably 0.1 % to 2% by weight, based on the weight of the substrate, of the solids of the composition is present on the treated substrate. In a particularly preferred embodiment, the composition is applied to the textile substrate in a dry cleaning equipment at the end of dry cleaning of the textile substrate or immediately after dry cleaning of the textile substrate. Generally, the textile substrate will also be subjected to a temperature of 30°C to 160°C in order to effect curing of the applied composition. Such heat treatment may be effected by application of the composition in a dry cleaning equipment and/or by subsequent ironing of the textile substrate.

Suitable textile substrates that can be treated in accordance with the method of the present invention include textile that is based on natural fibers, synthetic fibers or a mixture thereof. For example the textile substrate may consist of polyester fibers, polyamide fibers, cotton fibers, mixtures of polyester and cotton fibers, acrylic fibers and acetate fibers.

The invention is further illustrated with reference to the following examples, without however the intention to limit the invention thereto.

### EXAMPLES

### Formulation and treatment procedure

### Pad application

Treatment mixtures were prepared in perchloroethylene or in Isopar L. Treatments were applied to the test substrates by padding to provide a concentration of 0.1 to 0.6% (based on fabric weight and indicated as SOF (solids on fabric)). The treated fabrics were dried horizontal on a grid at room temperature for 20 minutes and then dried and cured in a forced air oven at 60°C during 25 minutes. One half of the total treated fabric area was ironed at 150°C during 15 seconds. The treated substrates were tested for their water repellency properties.

### Bath rinsing application

The test substrates were immersed in a glass bottle, containing a treatment solution at a desired concentration. The bottles were shaken at 150 rpm (setting on the shaker) during 20 minutes. The treated fabrics were taken out of the bottles, dried horizontal on a grid at room temperature for 20 minutes and then dried and cured in a forced air oven at 60°C during 25 minutes. One half of the total treated fabric area was ironed at 150°C during 15 seconds. The treated substrates were tested for their water repellency properties.

### Substrates

Substrates used for the evaluation of treatments of this invention were commercially available and are listed below :
100% cotton (khaki) : style no. 1511.1, available from Utexbel N.V., Ronse, Belgium.
PES/CO 65/35 (white) : polyester/cotton, style no. 2681, available from Utexbel N.V., Ronse, Belgium
100% PESµ (brown) : polyester microfiber, style no. 6145.3, available from Sofinal, Belgium.
PAµ : polyamide microfiber, style no. 7819.4, available from Sofinal, Belgium

Respective data of water repellency shown in the Examples and Comparative Examples were based on the following methods of measurement and evaluation criteria :

### Spray Test (SR)

The spray rating of a treated substrate is a value indicative of the dynamic repellency of the treated substrate to water that impinges on the treated substrate. The repellency was measured by Standard Test Number 22, published in the 1985 Technical Manual and Yearbook of the American Association of Textile Chemists and Colorists (AATCC), and was expressed in terms of 'spray rating' (SR) of the tested substrate. The spray rating was obtained by spraying 250 ml water on the substrate from a height of 15 cm. The wetting pattern was visually rated : using a 0 to 100 scale, where 0 meant complete wetting and 100 meant no wetting at all. The spray rating was recorded as SR 60 (no ironing) or SR 150 (after ironing).

### Water Repellency Test (WR)

The water repellency (WR) of a substrate was measured using a series of water-isopropyl alcohol test liquids and was expressed in terms of the "WR" rating of the treated substrate. The WR rating corresponded to the most penetrating test liquid which did not penetrate or wet the substrate surface after 15 seconds exposure. Substrates which were penetrated by or were resistant only to 100% water (0% isopropyl alcohol), the least penetrating test liquid, were given a rating of 0, whereas substrates resistant to 100% isopropyl alcohol (0% water), the most penetrating test liquid, were given a rating of 10. Other intermediate ratings were calculated by dividing the percent isopropylalcohol in the test liquid by 10, e.g., a treated substrate resistant to a 20%/80% isopropyl alcohol/water blend, but not to an 30%/70% blend, would be given a rating of 2. The water repellency was recorded as WR 60 (no ironing) or WR 150 (after ironing).

### Abbreviations

The following abbreviations and trade names were used in the Examples and Comparative Examples :
Isopar L : Isoparaffin, available from Exxon Chemical
PERC : perchloroethylene, available from Merck Eurolab N.V.
SLM 45182 : polydimethylsiloxane having pending epoxy groups, according to the following formula 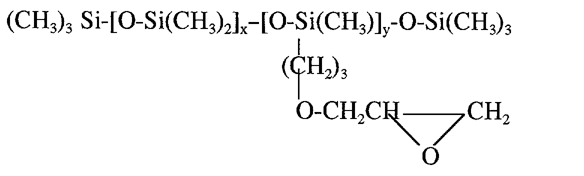
(x:y = 50:1), available from Wacker Chemie GmbH
SLM 50250/3 : α,ω-Bis-epoxy-polydimethylsiloxane (terminal epoxy groups and x = 70, y = 0 in formula above), available from Wacker Chemie GmbH
SLM 50400/7 : α,ω-Bis-hydroxy-polydimethylsiloxane, available from Wacker Chemie GmbH
SLM 55019/1 : α,ω-Bis-amino-polydimethylsiloxane, available from Wacker Chemie GmbH
Fluid 593 : polydimethylsiloxane/trimethylsiloxysilicate, available from Dow Corning
DBTDL : dibutyl tin dilaurate
Tilcom™ EHT : tetra-2-ethylhexyl titanate, available from Avecia s.a.
CAT : catalyst
Vertec™ KE2 : Diisopropoxy titanium bis(ethylacetoacetate), available from Avecia s.a.

All parts, ratios, percentages etc. in the following examples are by weight unless otherwise noted.

### Examples 1 to 5 and comparative examples C-1 to C-8

In examples 1 to 5 different substrates were treated with a mixture of SLM 45182 and Tilcom™ EHT catalyst in perchloroethylene, using pad application, so as to obtain a concentration on fabric as indicated in table 1 (%SOF). Comparative examples C-1 and C-2 were made in the same way, but without the addition of catalyst ; Comparative examples C-3 and C-4 were made using DBTDL catalyst ; Comparative examples C-5 and C-6 were made with Sn octanoate catalyst and comparative examples C-7 and C-8 were made with Zr isopropylate. The composition of the treating mixtures and the water repellency of the treated substrates are given in table 1.

**Table 1 :**

| Substrates treated with SLM 45182 and Tilcom™ EHT (pad/PERC) | | | | | | | | | | | | | | |
|---|---|---|---|---|---|---|---|---|---|---|---|---|---|---|
| Ex No | %SOF SLM 45182 | %SOF CAT | PES | | | | PES/CO | | | | PAµ | | | |
| | | | WR 60 | SR 60 | WR 150 | SR 150 | WR 60 | SR 60 | WR 150 | SR 150 | WR 60 | SR 60 | WR 150 | SR 150 |
| 1 | 0.1 | 0.1 | 1 | 100 | 1 | 100 | 0 | 0 | 0 | 0 | 1 | 50 | 1 | 50 |
| 2 | 0.2 | 0.1 | 1 | 100 | 1 | 100 | 0 | 50 | 0 | 50 | 2 | 70 | 2 | 70 |
| 3 | 0.2 | 0.12 | 2 | 100 | 2 | 100 | 2 | 100 | 2 | 100 | 2 | 100 | 2 | 100 |
| 4 | 0.2 | 0.16 | 2 | 100 | 2 | 100 | 2 | 100 | 2 | 100 | 2 | 100 | 2 | 100 |
| 5 | 0.4 | 0.12 | 2 | 100 | 2 | 100 | 2 | 100 | 2 | 100 | 2 | 100 | 2 | 100 |
| C-1 | 0.2 | 0 | 0 | 0 | 0 | 0 | 0 | 0 | 0 | 0 | 1 | 50 | 1 | 50 |
| C-2 | 0.4 | 0 | 0 | 0 | 0 | 0 | 0 | 0 | 0 | 0 | 1 | 50 | 1 | 50 |
| C-3 | 0.2 | 0.12 | 0 | 0 | 0 | 0 | 0 | 0 | 0 | 0 | 1 | 50 | 1 | 50 |
| C-4 | 0.2 | 0.16 | 0 | 0 | 0 | 0 | 0 | 0 | 0 | 0 | 1 | 50 | 1 | 50 |
| C-5 | 0.2 | 0.12 | 1 | 90 | 1 | 80 | 1 | 80 | 1 | 80 | 2 | 80 | 2 | 80 |
| C-6 | 0.2 | 0.16 | 1 | 90 | 1 | 90 | 1 | 80 | 1 | 80 | 2 | 80 | 2 | 80 |
| C-7 | 0.2 | 0.12 | 1 | 100 | 1 | 100 | 1 | 0 | 1 | 0 | 2 | 80 | 1 | 80 |
| C-8 | 0.2 | 0.16 | 1 | 100 | 1 | 100 | 1 | 90 | 1 | 80 | 2 | 70 | 1 | 70 |

The results in table 1 show that good water repellency properties could be obtained on all substrates when a composition including epoxydimethylsiloxane and titanate catalyst was applied to the fabrics. With PES as a substrate, even low application levels gave an acceptable water repellency.

Comparative examples without the use of catalyst showed only marginal performance on PAµ. Also, when the organic titanate ester was replaced with other alternative catalysts, the performace level was low.

### Examples 6 to 9 and comparative examples C-9 to C-11

In examples 6 to 9, fabrics was treated with a mixture of α,ω-Bis-epoxy-polydimethylsiloxane SLM 50250/3 with Tilcom™ EHT catalyst in perchloroethylene, in amounts as given in table 2. Comparative examples C-9 to C-11 were made in the same way, but with a mixture of Fluid 593 and Tilcom™ EHT. The samples were treated in a pad application so as to give a concentration on fabric (% SOF) as indicated in table 2. After treatment the fabrics were dried and ironed according to the general procedure. The results of water repellency are given in table 2.

**Table 2 :**

| Substrates treated with α,ω-bis-epoxy-polydimethylsiloxane and Tilcom™ EHT | | | | | | | | | | | | | | |
|---|---|---|---|---|---|---|---|---|---|---|---|---|---|---|
| Ex No | %SOF siloxane | %SOF CAT | PES | | | | PES/CO | | | | PAµ | | | |
| | | | WR 60 | SR 60 | WR 150 | SR 150 | WR 60 | SR 60 | WR 150 | SR 150 | WR 60 | SR 60 | WR 150 | SR 150 |
| SLM 50250/3 + Tilcom™ EHT | | | | | | | | | | | | | | |
| 6 | 0.2 | 0.08 | 1 | 100 | 1 | 100 | 1 | 90 | 1 | 90 | 2 | 100 | 2 | 100 |
| 7 | 0.2 | 0.12 | 1 | 100 | 1 | 100 | 2 | 100 | 2 | 100 | 2 | 100 | 2 | 100 |
| 8 | 0.2 | 0.16 | 1 | 100 | 1 | 100 | 2 | 100 | 2 | 100 | 2 | 100 | 2 | 100 |
| 9 | 0.4 | 0.08 | 1 | 100 | 1 | 100 | 1 | 90 | 1 | 90 | 2 | 100 | 2 | 100 |

| Fluid 593 + Tilcom™ EHT | | | | | | | | | | | | | | |
|---|---|---|---|---|---|---|---|---|---|---|---|---|---|---|
| C-9 | 0.2 | 0.12 | 1 | 80 | 1 | 80 | 1 | 70 | 1 | 70 | 2 | 80 | 2 | 80 |
| C-10 | 0.2 | 0.16 | 1 | 80 | 1 | 80 | 1 | 70 | 1 | 70 | 2 | 80 | 2 | 80 |
| C-11 | 0.4 | 0.08 | 2 | 100 | 1 | 100 | 2 | 80 | 2 | 80 | 2 | 100 | 2 | 100 |

The data in table 2 show that the treatment compositions according to the invention provided good water repellency at low application levels. The comparative examples using Fluid 593, a polysiloxane without epoxy groups generally performed less, in particular at low application levels of the composition.

### Examples 10 to 17 and comparative examples C-12 and C-13

In examples 10 to 17 different substrates were treated with a mixture of SLM 45182 and Tilcom™ EHT catalyst in Isopar L. Comparative examples C-12 and C-13 were made in the same way, but with a mixture of Fluid 593 and Tilcom™ EHT in Isopar L. The samples were treated in a pad application so as to give a concentration on fabric (% SOF) as indicated in table 3. After treatment the fabrics were dried and ironed according to the general procedure. The results of water repellency are given in table 3.

**Table 3 :**

| Substrates treated with SLM 45182 and Tilcom™ EHT - Isopar L | | | | | | | | | | | | | | |
|---|---|---|---|---|---|---|---|---|---|---|---|---|---|---|
| Ex No | %SOF siloxane | %SOF CAT | PES | | | | PES/CO | | | | PAµ | | | |
| | | | WR 60 | SR 60 | WR 150 | SR 150 | WR 60 | SR 60 | WR 150 | SR 150 | WR 60 | SR 60 | WR 150 | SR 150 |
| 10 | 0.2 | 0.1 | 1 | 80 | 1 | 80 | 2 | 90 | 2 | 90 | 2 | 90 | 2 | 90 |
| 11 | 0.2 | 0.12 | 2 | 90 | 2 | 90 | 2 | 100 | 2 | 100 | 2 | 100 | 2 | 100 |
| 12 | 0.2 | 0.14 | 2 | 90 | 2 | 90 | 2 | 100 | 2 | 100 | 2 | 100 | 2 | 100 |
| 13 | 0.2 | 0.16 | 2 | 90 | 2 | 90 | 2 | 100 | 2 | 100 | 2 | 100 | 2 | 100 |
| 14 | 0.2 | 0.2 | 2 | 90 | 2 | 90 | 2 | 100 | 2 | 100 | 2 | 100 | 2 | 100 |
| 15 | 0.4 | 0.12 | 2 | 100 | 2 | 100 | 2 | 90 | 2 | 90 | 2 | 100 | 2 | 100 |
| 16 | 0.4 | 0.16 | 2 | 100 | 2 | 100 | 2 | 100 | 2 | 100 | 2 | 100 | 2 | 100 |
| 17 | 0.4 | 0.2 | 2 | 100 | 2 | 100 | 2 | 100 | 2 | 100 | 2 | 100 | 2 | 100 |
| C-12 | 0.4 | 0.12 | 2 | 90 | 2 | 90 | | | | | 2 | 80 | 2 | 80 |
| C-13 | 0.4 | 0.2 | 2 | 90 | 2 | 90 | | | | | 2 | 90 | 2 | 90 |

The results in table 3 indicate that also for compositions applied out of Isopar L, good water repellency properties could be obtained. The results of the comparative examples using a polysiloxane that did not contain epoxy groups, showed poorer performance even at high application levels.

### Examples 18 to 20

In examples 18 to 22, fabrics were treated with a mixture of SLM 45182 and Vertec™ KE2 catalyst in perchloroethylene, in amounts as given in table 4. The samples were treated in a pad application so as to give a concentration on fabric (% SOF) as indicated in table 4. After treatment the fabrics were dried and ironed according to the general procedure. The results of water repellency are given in table 4.

**Table 4 :**

| Substrates treated with SLM 45182 and Vertec™ KE2 | | | | | | | | | | | | | | |
|---|---|---|---|---|---|---|---|---|---|---|---|---|---|---|
| Ex No | %SOF siloxane | %SOF CAT | PES | | | | PES/CO | | | | PAµ | | | |
| | | | WR 60 | SR 60 | WR 150 | SR 150 | WR 60 | SR 60 | WR 150 | SR 150 | WR 60 | SR 60 | WR 150 | SR 150 |
| 18 | 0.2 | 0.1 | 2 | 100 | 2 | 100 | 2 | 100 | 2 | 100 | 2 | 90 | 2 | 90 |
| 19 | 0.2 | 0.12 | 2 | 100 | 2 | 100 | 2 | 100 | 2 | 100 | 2 | 90 | 2 | 90 |
| 20 | 0.4 | 0.12 | 2 | 100 | 2 | 100 | 2 | 100 | 2 | 100 | 2 | 100 | 2 | 100 |

The results in the table indicated that also Vertec™ KE2 was an efficient catalyst for the treatment composition comprising epoxypolydimethylsiloxane. High water repellency properties were observed for all substrates when about 0.3% total solids were applied.

### Examples 21 and 22 and comparative example C-14

In examples 21 and 22 mixtures of epoxypolydimethylsiloxane SLM 45182 with α,ω-bis-hydroxy-polydimethylsiloxane SLM 50400/7 and Tilcom™ EHT catalyst (used at 0.12% SOF) were evaluated as water repellent treatment compositions. The substrates were treated in a pad application using PERC, so as to give a concentration on fabric (% SOF) as indicated in table 5. After treatment the fabrics were dried and ironed according to the general procedure. Comparative example C-14 was made in the same way, but with α,ω-Bis-hydroxy-polydimethylsiloxane SLM 50400/7 and Tilcom™ EHT (used at 0.12% SOF). The results of water repellency are given in table 5.

**Table 5 :**

| Substrates treated with mixtures of siloxanes and Tilcom™ EHT | | | | | | | | | | | | | | |
|---|---|---|---|---|---|---|---|---|---|---|---|---|---|---|
| Ex No | %SOF SLM 45182 | %SOF SLM 50400/7 | PES | | | | PES/CO | | | | PAµ | | | |
| | | | WR 60 | SR 60 | WR 150 | SR 150 | WR 60 | SR 60 | WR 150 | SR 150 | WR 60 | SR 60 | WR 150 | SR 150 |
| 21 | 0.05 | 0.15 | 1 | 100 | 1 | 100 | 1 | 90 | 1 | 90 | 2 | 80 | 2 | 80 |
| 22 | 0.15 | 0.05 | 1 | 100 | 1 | 100 | 2 | 100 | 2 | 100 | 2 | 100 | 2 | 100 |
| C-14 | 0 | 0.2 | 1 | 90 | 1 | 90 | 1 | 70 | 1 | 70 | 1 | 70 | 1 | 70 |

The results indicated that small amounts of hydroxy functional polydimethylsiloxane could be used in combination with epoxy polydimethylsiloxane. Hydroxy functional polydimethylsiloxane together with titanate catalyst did not perform well.

### Examples 23 and 24 and comparative example C-15

In examples 23 and 24 the same kind of experiment was repeated with SLM 42182 in combination with α,ω-bis-aminopolydimethylsiloxane SLM 55019/1. Tilcom™ EHT catalyst was used at 0.12% SOF. The results of water repellency are given in table 6.

**Table 6 :**

| Substrates treated with mixtures of siloxanes and Tilcom™ EHT | | | | | | | | | | | | | | |
|---|---|---|---|---|---|---|---|---|---|---|---|---|---|---|
| Ex No | %SOF SLM 45182 | %SOF SLM 55019/1 | PES | | | | PES/CO | | | | PAµ | | | |
| | | | WR 60 | SR 60 | WR 150 | SR 150 | WR 60 | SR 60 | WR 150 | SR 150 | WR 60 | SR 60 | WR 150 | SR 150 |
| 23 | 0.05 | 0.15 | 2 | 100 | 2 | 100 | 1 | 80 | 1 | 80 | 2 | 80 | 2 | 80 |
| 24 | 0.15 | 0.05 | 1 | 100 | 1 | 100 | 1 | 90 | 1 | 90 | 3 | 100 | 3 | 100 |
| C-15 | 0 | 0.2 | 1 | 100 | 1 | 100 | 1 | 80 | 1 | 50 | 2 | 80 | 2 | 70 |

The results indicated that also in this case, small amounts of amino functional polydimethylsiloxane could be added to epoxy polydimethylsiloxane and titanate in order to obtain good water repellency. On PAµ substrate, the combination of polydimethylsiloxanes provided higher water repellency. The use of amino functional polydimethylsiloxane together with titanate did not give acceptable performance, except for PES.

### Examples 25 to 28.

In examples 25 to 28 substrates were treated with mixtures of SLM 45182 and Tilcom™ EHT in perchloroethylene, by bath rinsing application at different concentrations as given in table 7. The treated substrates were dried and ironed according to the general procedure. The samples were tested for their water repellency. The results are given in table 7.

**Table 7 :**

| Substrates treated with SLM 45182 and Tilcom™ EHT (bath - PERC) | | | | | | | | | |
|---|---|---|---|---|---|---|---|---|---|
| Ex No | g/100 ml | PES | | | | PES/CO | | | |
| | | WR 60 | SR 60 | WR 150 | SR 150 | WR 60 | SR 60 | WR 150 | SR 150 |
| 25 | 4 | 1 | 100 | 1 | 100 | 1 | 70 | 1 | 70 |
| 26 | 6 | 1 | 100 | 1 | 100 | 2 | 90 | 1 | 90 |
| 27 | 8 | 1 | 100 | 1 | 100 | 2 | 100 | 2 | 100 |
| 28 | 10 | 1 | 100 | 1 | 100 | 2 | 100 | 2 | 100 |

As can be seen from the results, good water repellency properties on all substrates could be obtained when the epoxy polydimethylsiloxane and titanate mixture was applied at a concentration of 6g/100 ml. For PES lower concentrations could be used.

### Examples 29 to 32

In examples 28 to 32 the same kind of experiment was repeated on polyamide microfiber and cotton substrates. The results are given in table 8.

**Table 8 :**

| Substrates treated with SLM 45182 and Tilcom™ EHT (bath - PERC) | | | | | | | | | |
|---|---|---|---|---|---|---|---|---|---|
| Ex No | g/100 ml | PAµ | | | | CO | | | |
| | | WR 60 | SR 60 | WR 150 | SR 150 | WR 60 | SR 60 | WR 150 | SR 150 |
| 29 | 4 | 2 | 90 | 3 | 100 | 2 | 90 | 2 | 90 |
| 30 | 6 | 3 | 90 | 3 | 100 | 2 | 90 | 2 | 100 |
| 31 | 8 | 2 | 100 | 2 | 100 | 2 | 90 | 2 | 100 |
| 32 | 10 | 2 | 100 | 2 | 100 | 2 | 100 | 2 | 100 |

The same observations could be made from these results. Especially good results were obtained when epoxy polydimethylsiloxane and titanate was applied on PAµ, even at low add on levels.

### Examples 33 to 42

Examples 33 to 42 were made in the same way as examples 25 to 32, except that the treatments were done with Isopar L solvent instead of perchloroethylene.
The results are given in tables 9 and 10.

**Table 9 :**

| PES and PES/CO substrates treated with SLM 45182 and Tilcom™ EHT (Bath - Isopar L) | | | | | | | | | |
|---|---|---|---|---|---|---|---|---|---|
| Ex No | g/100 ml | PES | | | | PES/CO | | | |
| | | WR 60 | SR 60 | WR 150 | SR 150 | WR 60 | SR 60 | WR 150 | SR 150 |
| 33 | 4 | 1 | 100 | 1 | 100 | 2 | 100 | 2 | 100 |
| 34 | 6 | 1 | 100 | 1 | 100 | 2 | 100 | 2 | 100 |
| 35 | 8 | 1 | 100 | 1 | 100 | 2 | 100 | 2 | 100 |
| 36 | 10 | 2 | 100 | 2 | 100 | 2 | 100 | 2 | 100 |
| 37 | 12 | 2 | 100 | 2 | 100 | 2 | 100 | 2 | 100 |

**Table 10 :**

| PA and CO substrates treated with SLM 45182 and Tilcom™ EHT (Bath - Isopar L) | | | | | | | | | |
|---|---|---|---|---|---|---|---|---|---|
| Ex No | g/100 ml | PAµ | | | | CO | | | |
| | | WR 60 | SR 60 | WR 150 | SR 150 | WR 60 | SR 60 | WR 150 | SR 150 |
| 38 | 4 | 2 | 100 | 2 | 100 | 2 | 100 | 2 | 100 |
| 39 | 6 | 2 | 100 | 2 | 100 | 2 | 100 | 2 | 100 |
| 40 | 8 | 2 | 100 | 2 | 100 | 2 | 100 | 2 | 100 |
| 41 | 10 | 2 | 100 | 2 | 100 | 2 | 100 | 2 | 100 |
| 42 | 12 | 2 | 100 | 2 | 100 | 2 | 100 | 2 | 100 |

As can be seen in the tables, substrates treated with epoxy polydimethylsiloxane and titanate showed high water repellency properties at low add-on levels, indicating a high efficiency.

## Claims

1. Method for providing water repellency to a textile substrate comprising contacting the textile substrate with a composition comprising a solution of an epoxy functional polysiloxane and an organic titanate ester in an organic solvent.

2. Method according to claim 1 wherein said organic solvent consists of one or more non-aromatic solvents.

3. Method according to claim 2 wherein said organic solvent is selected from the group consisting of perchloroethylene and aliphatic isoparaffin solvents.

4. Method according to claim 1 wherein said polysiloxane corresponds to the general formula: 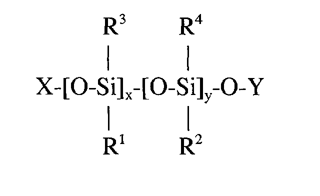 wherein X and Y each independently represents a terminal group, R¹ and R³ each independently represents an alkyl group, an aryl group, an alkylaryl group or an aralkyl group, R² represents an alkyl group, an aryl group, an alkylaryl group, an aralkyl group or an epoxy containing organic group, R⁴ represents an epoxy containing organic group, x and y represent the amount of the corresponding unit present in the polysiloxane, with the proviso that y represents an amount different from 0.

5. Method according to claim 4 wherein said terminal groups X and Y each independently represent R₃Si wherein each R independently represents an alkyl group, an aryl group, an alkylaryl group, an aralkyl group or an epoxy containing organic group.

6. Method according to claim 1 wherein said epoxy functional polysiloxane is a polysiloxane terminated with an epoxy containing organic group.

7. Method according to any of claims 4 to 6 wherein said epoxy containing organic group is an epoxy functionalised aliphatic group.

8. Method according to any of the previous claims wherein said organic titanate ester is an alkyl ester of titanic acid.

9. Method according to any of the previous claims wherein said composition is substantially free of other polysiloxanes that do not contain an epoxy group.

10. Method according to any of the previous claims wherein said composition comprises said epoxy functional polysiloxane in an amount of 5 to 8.5 % and said organic titanate ester in an amount of 1.5 to 5 % .

11. Method according to any of the previous claims wherein said textile substrate is contacted with said composition by spraying said composition on said textile substrate or by rinsing said textile substrate with said composition.

12. Method according to any of the previous claims further comprising the step of subjecting the textile substrate to a temperature of 30°C to 160°C.

13. Method according to any of the previous claims wherein said textile substrate is contacted with said composition in a dry cleaning equipment at the end of or after dry cleaning of said textile substrate.
